# EUROPÄISCHE PATENTANMELDUNG

(11) **EP 1 371 418 A1**
(43) Veröffentlichungstag der Anmeldung: **17.12.2003**
(21) Anmeldenummer: 02012472.3
(22) Anmeldetag: 11.06.2002
(51) Int. Cl.: B01J 37/02, B01D 53/94, B01J 23/38

(54) **Verfahren zur Herstellung eines Katalysators, Katalysator sowie Verwendung des Katalysators zur katalytischen Abgasreinigung**

(71) Anmelder: SIEMENS AKTIENGESELLSCHAFT, 80333 München (DE)
(72) Erfinder: Fischer, Stefan, 96215 Lichtenfels (DE)
(74) Vertreter: Tergau & Pohl Patentanwälte

(57) **Zusammenfassung**

Die Erfindung betrifft ein Verfahren zur Herstellung einer katalytisch aktiven Masse, wobei eine Grundkomponente zusammen mit einem Oxid oder einer gelösten Verbindung einer weiteren Komponente zu einer formbaren Masse verarbeitet, die formbare Masse zu einem Formkörper getrocknet und der Formkörper kalziniert wird. Zur Herstellung einer edelmetallhaltigen Beschichtung auf dem Formkörper ist es vorgesehen auf den Formkörper eine edelmetallhaltige Suspension aufzubringen und den Formkörper erneut zu trocknen. Die Erfindung betrifft weiterhin einen Katalysator mit einer derart hergestellten katalytisch aktiven Masse sowie eine Verwendung des Katalysators.

## Beschreibung

Die Erfindung betrifft ein Verfahren zur Herstellung einer katalytisch aktiven Masse, wobei eine Grundkomponente zusammen mit einem Oxid oder einer gelösten Verbindung einer weiteren Komponente zu einer formbaren Masse verarbeitet, die formbare Masse zu einem Formkörper getrocknet und der Formkörper kalziniert wird. Die Erfindung betrifft weiter einen Katalysator mit einer derart hergestellten katalytisch aktiven Masse sowie die Verwendung des Katalysators zur katalytischen Abgasreinigung.

Ein derartiges Verfahren zur Herstellung einer katalytisch aktiven Masse sowie ein derartiger Katalysator sind beispielsweise aus der DE 24 58 888 A1 bekannt. Die Verwendung von titandoxid-haltigen Katalysatoren zum Abbau von Dioxinen und/oder Furanen ist weiter aus der EP 0 471 033 B1, der EP 0 252 521 A1 oder der WO 91/04780 bekannt.

Wie im oben genannten Stand der Technik ausführlich geschildert, wird zum Herstellen der katalytisch aktiven Masse das Titandioxid als Grundkomponente unter Zugabe eines Lösungsmittels mit Wolfram- und/oder Vanadiumoxid als weitere Komponente zunächst zu einer formbaren Masse verarbeitet. Die formbare Masse kann alternativ auch durch Zugabe von Titandioxid zu einer gelösten Verbindung von Wolfram und/oder Vanadium hergestellt werden. Als solche gelöste Verbindungen werden beispielsweise Ammoniumparawolframat oder Vanadylsulfat eingesetzt. Die Formbarkeit der Masse wird durch den Gehalt an Lösungsmittel beeinflusst. Selbstverständlich können der formbaren Masse Zuschlagstoffe, wie z.B. keramische Fasern, Glasfasern, und/oder Filmbildehilfsmittel beigemengt werden.

Die formbare Masse wird dann beispielsweise zu einem Wabenkörper mit durchströmbaren Kanälen extrudiert, zu Peletts weiterverarbeitet oder aber als Beschichtung auf einen Tragkörper aufgebracht. Die Beschichtung des Tragkörpers geschieht dabei durch Aufwalzen der Masse oder aber durch Eintauchen des Tragkörpers in die Masse. Die extrudierte oder weiterverarbeitete Masse wird anschließend getrocknet und wird im weiteren als "Formköper" bezeichnet. Zur Ausbildung der katalytischen Aktivität wird anschließend der Formkörper kalziniert.

Aus der derart hergestellten katalytisch aktiven Masse bestehende Vollkörper oder aber mit dieser Masse beschichtete Tragkörper sind als Katalysatoren zum Abbau von Stickoxiden gemäß dem SCR-Verfahren oder zum Abbau von Dioxinen und/oder Furanen vielfach im Einsatz. Bei dem SCR-Verfahren, d.h. dem Verfahren der selektiven katalytischen Reduktion, werden Stickoxide in Gegenwart eines Reduktionsmittels an der katalytisch aktiven Masse zu ungefährlichem Stickstoff und Wasser umgesetzt. Dioxine und/oder Furane werden an der katalytisch aktiven Masse zu unschädlichen Verbindungen oxidiert.

Zur Verbesserung der katalytischen Aktivität der katalytisch aktiven Masse, wurden in der Vergangenheit zahlreichen Anstrengungen unternommen, um gezielt zusätzliche katalytisch aktive Substanzen in die Masse einzubringen.

Beispielsweise ist aus der WO 00/67880 ist ein Verfahren zur Herstellung einer katalytisch aktiven Masse bekannt, wobei Titandioxid zusammen mit einem Oxid oder mit einer gelösten Verbindung von Wolfram und/oder Vanadium zu einer formbaren Masse verarbeitet, die formbare Masse zu einem Formkörper getrocknet und der Formkörper kalziniert wird. Hierbei wird der Formkörper nach dem Kalzinieren zunächst mit einer gelösten Verbindung von Titan und Vanadium getränkt und erneut getrocknet. Eine derartige katalytisch aktive Masse weist eine hohe katalytische Aktivität zum Abbau von Dioxinen und/oder Furanen auch in einem Temperaturbereich von unterhalb 250 ° C auf. Dabei wird der Formkörper vorzugsweise nach dem Kalzinieren getränkt. Zwar kann gemäß der WO 00/67880 prinzipiell auch der noch nicht kalzinierte Formkörper mit der Lösung getränkt werden, jedoch ist dabei besondere Vorsicht geboten, da der nicht kalzinierte Formkörper in Lösung leicht zerfällt.

Die Tränkung des Formkörpers erfolgt mit einer wässrigen Lösung aus Vanadylsulfat, Titanylsulfat und Ammoniumparawolframat. Nach Tränkung des Formkörpers erfolgt eine erneute Trocknung bei 20 °C mit einer Dauer zwischen 1 und 30 Min..

Aus der EP 0 586 814 A2 geht ein Verfahren zur Herstellung von Katalysatoren zur Entfernung von Stickstoffoxiden aus Abgasen hervor, wobei das gaseinlaufseitige Ende der Katalysatoren mit Biophosphaten und/oder kondensierten Phosphaten und/oder Silikaten und/oder Boraten überzogen und thermisch nachbehandelt wird. Dabei wird das gaseinlaufseitige Ende des Grünkörpers in eine wässrige Zubereitung aus Biophosphaten und/oder kondensierten Phosphaten und/oder Silikaten und/oder Boraten getaucht und anschließend der Grünkörper bei Temperaturen von 300 bis 700 °C kalziniert. Unter "Grünkörper" ist der geformte Katalysator zu verstehen, der zwar schon getrocknet, aber noch nicht kalziniert worden ist. Die Eintauchtiefe des Grünkörpers in die wässrige Lösung beträgt zwischen 0,5 und 10 cm. Die Viskosität der gemäß der EP 0 586 814 A1 verwendeten wässrigen Zubereitung wird über ihren Wassergehalt so eingestellt, dass die nur durch Trocknung verfestigte Struktur der zu tauchenden Grünkörper sich nicht auflöst. Bei der Tauchung wird eine hinreichend dicke Schicht, die das gaseinlaufseitige Ende des Grünkörpers aufgebracht bzw. dringt bis in das poröse Material des Grünkörpers ein.

In der EP 0 514 682 B1 ist es beschrieben, eine zusätzliche metallische Komponente durch ein Tränkungsverfahren auf der vorher hergestellten Katalysatorformkörper aufzubringen, so dass diese Komponente nach dem Trocknen als Überzug oder Schicht, die Teile der Katalysatoroberfläche bedeckt, vorliegt. Die Katalysatoren werden nach der Kalzinierung mit einer Platinnitrat-Lösung oder einer Palladiumnitrat-Lösung getränkt. Der getränkte Formkörper wird anschließend getrocknet. Es hat sich gezeigt, dass mit dieser zusätzlichen Komponente die Abbauraten zum oxidativen Abbau von organischen Verbindungen aus Abgasen von Verbrennungsanlagen weiter gesteigert werden können.

Die aus dem Stand der Technik bekannten Tränkverfahren zum Einbringen zusätzlicher katalytisch aktiver Komponenten in die Masse bzw. auf den Katalysator durch Eintauchen des Katalysators in eine wässrige Lösung bis zu der gewünschten Länge bzw. für eine gewisse Zeitdauer sind maßgeblich durch den Kapillareffekt beeinflusst. Dieser führt nachteiliger Weise nicht zu einer reproduzierbaren und räumlich fest abgegrenzten Schicht auf dem Katalysatorkörper. Das gewünschte Tränkungsergebnis ist daher häufig unbefriedigend, vor allem im Hinblick auf die Einreichung möglichst geringer Schwankungsbreiten bei der Herstellung von Katalysatoren mit identischen Vorgaben für eine aufzubringende Beschichtung auf den Grundkörper.

Aufgabe der Erfindung ist es daher, ein Verfahren zur Herstellung einer katalytisch aktiven Masse der eingangs genannten Art anzugeben, mit dem sich eine katalytisch aktive Masse mit hoher Reproduzierbarkeit herstellen lässt und mit dem insbesondere eine vorgebbare katalytische Aktivität geometrisch sehr genau eingestellt werden kann. Weiter ist es Aufgabe der Erfindung einen Katalysator anzugeben, mit dem ein sehr effektiver Abbau von Schadstoffen in Abgasen von Verbrennungsanlagen möglich ist. Ferner ist es Aufgabe der Erfindung, eine Verwendung für einen derartigen Katalysator anzugeben.

Hinsichtlich des Herstellungsverfahrens wird die Aufgabe erfindungsgemäß gelöst durch ein Verfahren zur Herstellung einer katalytisch aktiven Masse, wobei eine Grundkomponente zusammen mit einem Oxid oder einer gelösten Verbindung einer weiteren Komponente zu einer formbaren Masse verarbeitet, die formbare Masse zu einem Formkörper getrocknet und der Formkörper kalziniert wird, wobei auf den Formkörper eine edelmetallhaltige Suspension aufgebracht und der Formkörper erneut getrocknet wird.

Die Erfindung geht erstmals gänzlich von den bisher üblichen Tränkverfahren ab, um eine katalytisch aktive Masse herzustellen. Die mit den Tränkverfahren einhergehenden schwer reproduzierbaren und nur unzureichend kontrollierbaren Kapillareffekte werden umgangen, indem eine edelmetallhaltige Suspension auf den Formkörper aufgebracht und der Formkörper erneut getrocknet wird. Eine Suspension ist dabei ein heterogenes Gemenge aus dem Edelmetall und einer Flüssigkeit, z.B. Wasser, die in Form einer Aufschlämmung oder eines Schlickers der gewünschten Konsistenz auf den Formkörper aufgebracht wird. Insbesondere aufgrund der gegenüber einer wässrigen Lösung deutlich erhöhten Viskosität einer Suspension sind die bisher zu verzeichnenden kapillaren Effekte weitgehend unterdrückt oder sogar gänzlich verhindert. Das Aufbringen der Suspension auf den Formkörper kann dabei sehr genau und reproduzierbar in den gewünschten Bereichen auf der Oberfläche des Formkörpers erfolgen. Das Aufbringen kann dabei ein Bestreichen oder ein Bespritzen des Formkörpers mit der Suspension oder aber ein Eintauchen des Formkörpers über eine gewünschte Länge in die Suspension erfolgen. Aufgrund des kolloiden Charakters der Suspension können edelmetallhaltige Bereiche mit vorgegebener Geometrie auf dem Formkörper sehr genau hergestellt und abgegrenzt werden. Ebenso kann sowohl die Dicke der auf dem Formkörper herzustellenden edelmetallhaltigen Schicht mit dem Verfahren hoch präzise eingestellt werden, als auch der Anteil des Edelmetalls in der Schicht über den gewählten Edelmetallgehalt in der Suspension. Die katalytische Aktivität kann somit in den Oberflächenbereichen des Formkörpers, in denen die edelmetallhaltige Suspension aufgebracht wurde sehr genau eingestellt werden.

Vorteilhafterweise wird die edelmetallhaltige Suspension nach dem Kalzinieren auf den Formkörper aufgebracht. Zwar kann prinzipiell der noch nicht kalzinierte Formkörper ebenfalls mit der Suspension beaufschlagt werden, jedoch ist dabei besondere Vorsicht geboten, da der nicht kalzinierte Formkörper aufgrund des Flüssigkeitsanteils in der Suspension in gewisser Weise zu einer Verformung oder zu einem Zerfallen neigt.

Von Vorteil für die Haftungseigenschaften der Suspension ist es, wenn die Suspension neben der edelmetallhaltigen Komponente zusätzlich die Grundkomponente der katalytisch aktiven Masse enthält. Durch die Verwendung der Grundkomponente der katalytisch aktiven Masse für die Suspension werden keine zusätzlichen chemischen Bestandteile in die Masse eingebracht. Dies ist sowohl für die katalytische Aktivität der Masse, insbesondere in den Bereichen der Masse, die durch Aufbringen der edelmetallhaltigen Suspension auf den Formkörper hergestellt sind, als auch für die chemische Stabilität der Masse sehr von Vorteil. Mit dem Aufbringen einer derartigen Suspension auf den Formkörper kann nach dem Trocknungs- und/oder Kalzinierungsvorgang somit eine katalytisch aktive Masse hergestellt werden, die eine Schicht aufweist, in der sowohl die Grundkomponente als auch die Edelmetallkomponente vorliegt. Im Gegensatz zu einer weitgehend undefinierten Eindiffusion einer Edelmetallkomponente in vorhandene Poren des Formkörpers bei einem Tränkvorgang wird bei der Erfindung ein geometrisch klar abgegrenzter Bereich, z.B. eine Schicht, mit konstanter Edelmetallkonzentration eingebettet in die Grundkomponente der katalytisch aktiven Masse erzeugt.

Vorzugsweise enthält die Suspension zusätzlich die oder eine der weiteren Komponenten. Somit kann die chemische Zusammensetzung des beschichteten Katalysators an der Oberfläche durch die Zusammensetzung der Suspension, beispielsweise des Schlickers oder der Aufschlämmung definiert werden. Dadurch können, falls gewünscht, auch zusätzlich zum Edelmetall und zur Grundkomponente der katalytisch aktiven Masse auch die anderen Komponenten der Masse im Schlicker enthalten sein, um somit den beschichteten Katalysator in der chemischen Zusammensetzung zu variieren. Von besonderem Vorteil ist es, dass hierdurch auch gewährleistet ist, dass die Verbindung von mittels der durch das Aufbringen der Suspension definierten Beschichtung und dem Formkörper durch die ähnliche oder weitgehend gleiche chemische Zusammensetzung der Oberflächenbereichen und der inneren Bereichen des Formkörpers nach der Kalzinierung sehr langzeitstabil ist. Die chemische Beständigkeit und die physikalische Haftungsvermögen der durch die Suspension hergestellten Oberflächenschicht ist somit gegenüber herkömmlichen Verfahren deutlich gesteigert. Neben der geometrisch wohl definierbaren und weitgehend homogenen edelmetallhaltigen Schicht wird daher mit der Erfindung zusätzlich eine chemische Anpassung an das Grundmaterial des Formkörpers erreicht.

In besonders bevorzugter Ausgestaltung wird Titandioxid, insbesondere in der Anatas-Modifikation, als Grundkomponente mit einer BET von zwischen etwa 20 bis 150 m²/g in dem Verfahren zur Herstellung der katalytisch aktiven Masse verarbeitet.

Weiter bevorzugt wird Wolfram und/oder Vanadium als weitere Komponente verarbeitet. Diese liegt als Wolframoxid bzw. Vanadiumoxid oder als eine gelöste Verbindung der weiteren Komponente vor und wird zusammen mit der Grundkomponente zu der formbaren Masse verarbeitet. Als solche gelöste Verbindung werden beispielsweise Ammoniumparawolframat oder Vanadylsulfat eingesetzt. Die Formbarkeit der Masse wird durch den Gehalt an Lösungsmittel beeinflusst. Selbstverständlich können der formbaren Masse Zuschlagstoffe, wie z.B. keramische Fasern, Glasfasern und/oder Filmbildehilfsmittel beigemengt werden.

In der Suspension liegt das Edelmetall wahlweise als heterogenes Gemenge mit Titandioxid als Grundkomponente der katalytisch aktiven Masse sowie weiterhin wahlweise zusammen mit-Wolfram und/oder Vanadium als weitere Komponente vor, welche in Form der Suspension auf den Formkörper aufgebracht werden.

In einer bevorzugten Ausführungsform des Verfahrens wird eine Suspension auf den Formkörper aufgebracht, die mindestens ein Edelmetall aus der Gruppe umfassend Platin, Palladium, Ruthenium, Rhodium, Iridium und Osmium aufweist. Auf diese Weise ist es möglich je nach Anforderung an die katalytische Aktivität und die Einsatzbedingungen der katalytisch aktiven Masse ein oder mehrere Edelmetallbestandteile aus der vorgenannten Gruppe von Elementen der VIII. Nebengruppe des Periodensystems in dem heterogenen Gemenge der Suspension vorzusehen.

Bevorzugt wird die Suspension in Form einer Schicht mit einer Schichtdicke zwischen etwa 0,1 mm bis 1 mm auf den Formkörper aufgebracht.

Weiter bevorzugt wird als flüssige Komponente der Suspension Wasser verwendet. Sowohl bezüglich Umweltaspekten als auch bezüglich der Kosten ist es von Vorteil, wenn die Suspension auf der Basis von Wasser als flüssige Komponente eingesetzt wird. Auf teure und ggf. umweltschädigende organische Lösungsmittel und Säuren kann dadurch bei der Herstellung gänzlich verzichtet werden. Die edelmetallhaltige Suspension kann z.B. einfach dadurch zubereitet werden, indem die feste Komponente, d.h. die Edelmetallkomponente oder die Edelmetallkomponenten in Form eines feinen metallischen Pulvers bzw. eines Edelmetallstaubs in der flüssigen Komponente aufgeschlämmt werden. Es ist vorteilhafterweise auch möglich das Edelmetall in Form eines Precursors, d.h. einer Vorläuferverbindung enthaltend das Edelmetall, zuzugeben. Beispielsweise kann Platin(II)-nitrat Pt/(NO₃)₂ als Precursor eingesetzt werden und in dieser Form bei der Zubereitung der Suspension mit der flüssigen Komponente innig vermischt werden. Die Precursorverbindung kann dabei wahlweise selbst als wässrige Lösung oder als kristalliner pulverisierter Feststoff vorliegen. Der Anteil der Edelmetallkomponente in der Suspension richtet sich dabei nach der Aufnahmefähigkeit der anderen Bestandteile in der Suspension für das Edelmetall oder den Precursor und nach der gewünschten Konzentration an Edelmetall in einer durch Aufbringen der Suspension auf den Formkörper hergestellten edelmetallhaltigen Beschichtung. Durch thermische Behandlung, z.B. in einem Trocknungsprozess oder dem Kalzinierungsprozess wandelt sich die Precursorverbindung in die katalytisch aktive Edelmetallkomponente, z.B. Platin Pt aus Platin(II)-nitrat Pt(NO₃)₂, um. Diese Variante ist besonders günstig, falls nach Aufbringen der Suspension auf den Formkörper und nach dessen Trocknung die Kalzinierung erfolgt.

Wie bereits oben dargelegt, können weitere feste Bestandteile in der edelmetallhaltigen Suspension vorliegen, beispielsweise Titandioxid als Grundkomponente und wahlweise zusätzlich eine weitere Komponente der katalytisch aktiven Masse.

Hinsichtlich der katalytischen Aktivität ist es weiter von Vorteil, wenn die erneute, nach dem Aufbringen der Suspension auf den Formkörper erfolgende Trocknung bei einer Temperatur zwischen etwa 20 °C bis 200 °C, insbesondere 20 °C bis 100 °C, erfolgt.

In einer weiteren vorteilhaften Ausgestaltung der Erfindung erfolgt das Kalzinieren bei einer Temperatur zwischen etwa 200 °C bis 800 °C.

Die Aufgabe hinsichtlich des Katalysators wird durch einen Katalysator gelöst, welcher eine erfindungsgemäß hergestellte katalytisch aktive Masse umfasst.

Dabei weist in einer bevorzugten Ausgestaltung der Katalysator einen Grundkörper auf, auf den die edelmetallhaltige Schicht aufgebracht ist.

Bevorzugt beträgt bei dem gemäß dem Verfahren hergestellten Katalysator der Edelmetallgehalt in der Schicht zwischen 1 und 5 Gew.-%, bezogen auf das Gesamtgewicht der Schicht. Beispielsweise ist ein Edelmetallgehalt von 2 Gew.-% in der Schicht eingestellt, wodurch sich eine besonders günstige katalytische Aktivität ergibt.

In einer weiter bevorzugten Ausgestaltung des Katalysators weist die Schicht einen Platingehalt von 1,5 bis 2,5 Gew.-%, insbesondere 2 Gew.-% auf. Dabei ist weiter bevorzugt Platin die einzige Edelmetallkomponente in der Schicht, die durch Aufbringen einer entsprechenden Suspension auf den Formkörper gemäß dem Verfahren hergestellt ist.

Vorzugsweise weist der Katalysator eine Gaseintrittsseite und eine entlang einer Längsachse der Gaseintrittsseite gegenüberliegende Gasaustrittsseite auf, wobei die Schicht auf den Grundkörper entlang der Längsachse zwischen der Gaseintrittsseite und der Gasaustrittsseite mit einer vorgegebenen Länge aufgebracht ist. Als besonders vorteilhafte Konfiguration für den Einsatz des Katalysators in einem SCR-Verfahren zum Abbau von Stickoxiden aus einem Abgas erweist sich hierbei eine vorzugsweise gasaustrittsseitig aufgebrachte edelmetallhaltige Schicht über eine gewisse vorgegebene Länge. Das zu reinigende Abgas strömt dabei von der Gaseintrittsseite entlang der Längsachse durch den Katalysator hindurch und das von den Schadstoffen gereinigte Abgas verlässt den Katalysator gasaustrittsseitig.

Hinsichtlich einer Sauerstoff enthaltenden Abgaszusammensetzung ist es erforderlich, dem Abgas ein Reduktionsmittel beizugeben, welches dann an dem Katalysator mit dem zu beseitigenden Schadstoff, beispielsweise Stickoxide, zu unschädlichen Verbindungen reagiert. Dies ist beispielsweise auch bei dem hier vorliegenden Katalysator der Fall, sofern dieser zum Abbau von Stickstoffoxiden in sauerstoffhaltigen Abgasen verwendet wird. Dazu wird als ein Reduktionsmittel eines Substanz dem Abgas beigegeben, welche auch in Anwesenheit von Sauerstoff die im Abgas vorhandenen Stickoxide zu unschädlichem Stickstoff reduziert. Besonders vorteilhaft lässt sich diese Reaktion mit einem sogenannten DeNOₓ-Katalysator mit Titandioxid als Grundkomponente und Beimengungen an Vanadiumpentoxid, Molybdäntrioxid und/oder Wolframtrioxid katalysieren. Ein solcher Katalysator setzt gemäß dem SCR-Verfahren (selektive katalytische Reduktion) Stickoxide mit einem geeigneten Reduktionsmittel zu Stickstoff und Wasser um. Ein solches Reduktionsmittel kann beispielsweise Ammoniak und/oder Harnstoff umfassen.

Um einen möglichst vollständigen Abbau des Schadstoffes im Abgas zu erzielen, ist es erforderlich, dass zugegebene Reduktionsmittel in einer bezüglich der Konzentration des Schadstoffes stöchiometrischen Menge hinzuzugeben. Allerdings unterliegt in der Regel die Konzentration eines Schadstoffs im Abgas einer Verbrennungsanlage zeitlichen Schwankungen. Außerdem bestimmen gewisse Reaktionsparameter, wie z.B. Temperatur oder Druck, die Umsetzung des Schadstoffes mit dem Reduktionsmittel. So kann es beispielsweise zu einer zeitweisen Überdosierung des Reduktionsmittels kommen, was eine Emission des Reduktionsmittels zusammen mit dem Abgas in die Umwelt zur Folge hätte. Eine derartige Emission von Reduktionsmittel wird auch als Reduktionsmittel-Schlupf oder auch Reduktionsmittel-Durchbruch bezeichnet und sollte möglichst vermieden werden. Auch Reduktionsmittel selbst könnte, wie beispielsweise Ammoniak, schädlich sein. Darüber hinaus kann ein Reduktionsmittel-Schlupf in der Regel auch eine unwirtschaftliche Arbeitsweise des Katalysators bedeuten. Außerdem kann hierbei Reduktionsmittel im Abgas ungenutzt verbleiben.

In einer bevorzugten Ausgestaltung ist daher die edelmetallhaltige Schicht gasaustrittsseitig auf einer bestimmten Länge des Katalysators entlang seiner Längsachse aufgebracht. Die vorbeschriebene Problematik eines Ammoniak-Durchbruchs oder Ammoniak-Schlupfes im Betrieb des Katalysators in einem SCR-Verfahren kann durch die Oxidation des überschüssigen Ammoniaks gasaustrittsseitig des Katalysators, d.h. entlang der Strömungsrichtung des Abgases am Ende des Katalysators, stark vermindert werden. Insbesondere ist es von Vorteil, wenn diese gasaustrittsseitige, eine Oxidation begünstigende Schicht Platin als Edelmetall enthält.

In einer bevorzugten Ausgestaltung weist der Katalysator einen keramischen Grundkörper umfassend Titandioxid mit einem Anteil von 70 bis 95 Gew.-% und Wolframtrioxid mit einem Anteil von 2 bis 10 Gew.-% auf.

Weiter bevorzugt weist der Katalysator einen weiteren Bestandteil aus der Gruppe umfassend 0 bis 10 Gew.-% Molybdäntrioxid, 0 bis 5 Gew.-% Vanadiumpentoxid, 0,1 bis 6 Gew.-% Aluminiumoxid sowie 0,1 bis 6 Gew.-% Siliciumdioxid auf.

Die Aufgabe bezüglich des Einsatzbereichs wird erfindungsgemäß gelöst durch die Verwendung eines derartigen Katalysators zur katalytischen Abgasreinigung, insbesondere zum Abbau von Stickoxiden in Verbrennungsanlagen. Dabei ist insbesondere die Verwendung des Katalysators in einem SCR-Verfahren zur Abgasreinigung in einem transienten Betrieb geeignet, d.h. mit schnell wechselnden Betriebszuständen der Verbrennungsanlage oder des Verbrennungsmotors und den daraus resultierenden wechselnden Abgaszusammensetzungen. Dies ist vor allem im Nutzfahrzeugeinsatz der Fall, beispielsweise bei der Entstickung von Abgasen aus einem Dieselmotor eines Lastkraftwagens.

Ausführungsbeispiele der Erfindung werden anhand einer Zeichnung sowie anhand von Beispielen näher erläutert.

Gleichen Bezugszeichen kommen in den Figuren dabei die gleiche Bedeutung zu. Es zeigen schematisch und nicht maßstäblich:
- FIG 1: einen Katalysator mit einer gemäß dem erfindungsgemäßen Verfahren hergestellten katalytisch aktiven Masse,
- FIG 2: einen vergrößerten Ausschnitt des in FIG 1 gezeigten Katalysators in einer Schnittansicht entlang der Schnittlinie II-II,
- FIG 3: eine alternative Ausgestaltung eines erfindungsgemäßen Katalysators mit einem Tragkörper und einer darauf aufgebrachten katalytisch aktiven Masse, und
- FIG 4: einen als Plattenkatalysator ausgeführten Katalysator.

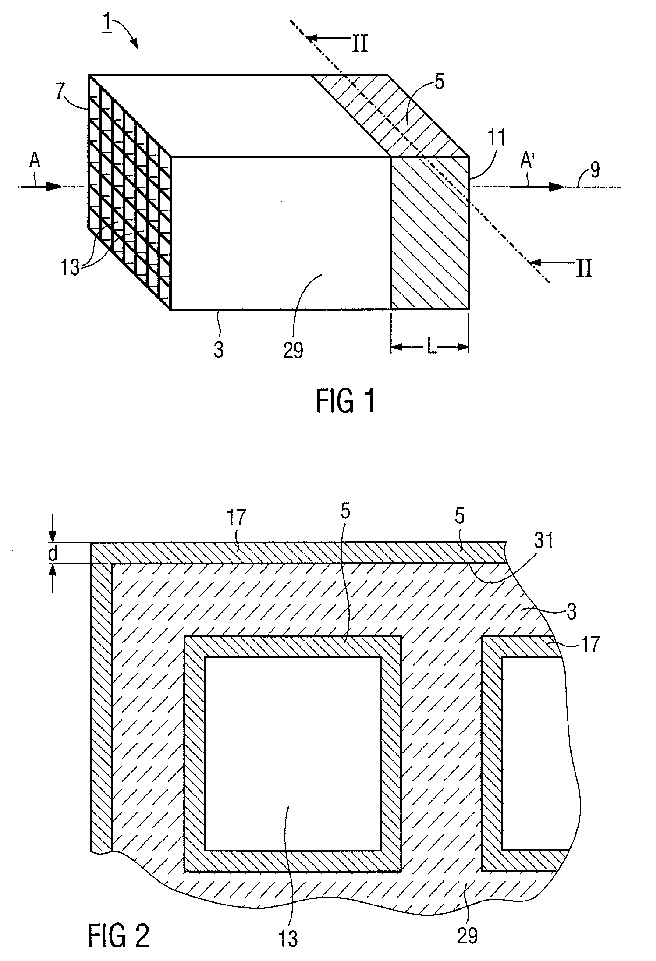

FIG 1 zeigt einen gemäß dem Verfahren hergestellten Katalysator 1 in Wabenform. Der Katalysator 1 weist hierzu eine Anzahl von von einem Abgas A durchströmbaren, parallelen Kanälen 13 auf, die sich im Wesentlichen entlang einer Längsachse 9 erstrecken. Der Katalysator 1 ist als ein Vollextrudat aus einer katalytisch aktiven Masse hergestellt, welche 80 Gew.-% Titandioxid, 8 Gew.-% Wolframtrioxid, 3 Gew.-% Vanadiumpentoxid und einen Rest aus keramischen Hilfs- und Füllstoffen enthält. Die katalytisch aktive Masse wurde durch Vermischen der Oxide, anschließendem Trocken zu einem Formkörper, Aufbringen einer edelmetallhaltigen Suspension auf den Formkörper sowie nachfolgendes erneutes Trocknen und abschließendem Kalzinieren bei 550 °C hergestellt.

Die Zubereitung der Suspension erfolgt unter Zugrundelegung eines Grundmaterials 29, welches bei der Herstellung des Grundkörpers 3 des Katalysators 1 verwendet wird. Entsprechend der oben beschriebenen Rezeptur für den Formkörper wird aus 80 Gew.-% Titandioxid, 8 Gew.-% Wolframtrioxid sowie einem Rest aus keramischen Hilfs- und Füllstoffen eine Knetung angesetzt. Die knetfähige formbare Masse wird mit bis zu etwa 60 Gew.-% mit Wasser versetzt und anschließend 24 Std. in einer Kugelmühle gemahlen. Anschließend wird die physikalische und chemische Konsistenz der knetfähigen Masse geprüft, damit die herzustellenden Suspension die Kanäle 13 nicht verstopft. Erforderlichenfalls muss hier unter Zugabe von Wasser der Flüssigkeitsanteil in der Suspension zur Erhöhung der Viskosität weiter erhöht werden. Die einzustellende Konsistenz der Suspension hängt von der Oberflächenstruktur des Formkörpers ab, auf den die edelmetallhaltige Suspension aufgebracht wird. So benötigen beispielsweise feinzellige Waben einen sehr dünnen Schlicker, damit die Kanäle nicht verstopfen. Bei grobzelliger Struktur des Formkörpers ist eine festere Konsistenz anwendbar. Die Viskosität der Suspension kann als Parameter für die Konsistenz der Suspension herangezogen und gemessen werden.

Eine weitere beispielhafte Rezeptur für die knetfähige formbare Masse, wie sie bei der Zubereitung der Suspension angesetzt werden kann, hat folgende Zusammensetzung: 83.7 Gew.-% TiW, 1.4 Gew.-% SiO₂, 0.9 Gew.-% SO₄, 3.0 Gew.-% Ton, 8 Gew.-% Glasfaser, 2.0 Gew.-% Binder, 2.1 Gew.-% Verflüssiger in wässriger Suspension mit einem Anteil von ca. 70 % Wasser als flüssige Komponente. Die Edelmetallkomponente wird wie oben beschrieben entweder als Precursor oder als Metallpulver zugesetzt.

Als Edelmetall wird Platin beispielsweise in Form eines Precursors als Platin II-nitrat Pt(NO₃)₂ der Suspension zugegeben, so dass eine edelmetallhaltige Suspension hergestellt ist. Die Zugabemenge des Precursors richtet sich dabei im Wesentlichen nach der Menge an Platin, die die edelmetallhaltige Beschichtung auf dem Katalysator enthalten soll. Nach dem Aufbringen und Trocknen der edelmetallhaltigen Suspension auf den Formkörper erfolgt eine Kalzinierung, die den Platin-Precursor in die aktive Komponente, nämlich metallisches Platin umwandelt.

Der Precursor kann bei hinreichend hohem Flüssigkeitsanteil in der Suspension, z.B. Wasser, in Form von Pulver zugegeben werden. Es empfiehlt sich in der Regel aber Precursorlösungen zu verwenden, da eine gleichmäßige Verteilung in der Suspension damit leichter erreicht wird. Als Precursorsubstanzen kommen prinzipiell alle Verbindungen in Frage, die bei etwa 550°C thermisch zersetzt werden können und bei denen keine unerwünschten Zersetzungsprodukte, z.B. Rückstände, auf der Oberfläche des Formkörpers zurückbleiben. Nitrate, Carbonate oder Acetate des jeweiligen Edelmetalls sind hierfür geeignet.

Alternativ kann die Edelmetallkomponente als feines Metallpulver der knetfähigen Masse zugegeben werden, um eine edelmetallhaltige Suspension zuzubereiten. Allerdings ist zu erwarten, dass eine Metalldispersion auf der Katalysatoroberfläche hinsichtlich der katalytischen Aktivität etwas geringer ausfällt als bei der Verwendung von Precusoren.

Ein auf diese Weise enthaltener Katalysator 1 ist beispielsweise in FIG 1 dargestellt. Der Katalysator 1 erstreckt sich entlang der Längsachse 9 und weist Kanäle 13 zum Durchströmen des Katalysators mit dem katalytisch zu reinigenden Abgas A auf. Der Katalysator weist einen sich entlang der Längsachse 9 erstreckenden wabenförmigen Grundkörper 3 auf, welcher eine Gaseintrittsseite 7 für das Abgas A und eine entlang der Längsachse 9 der Gaseintrittsseite 7 gegenüberliegende Gasaustrittsseite 11 aufweist. Bei dieser Ausführungsform als Vollextrodat bildet der keramische Grundkörper 3 zugleich die katalytisch aktive Oberfläche 29 aus. Eine edelmetallhaltige Schicht 5 ist auf den Grundkörper 3 entlang der Längsachse 9 zwischen der Gaseintrittsseite 7 und der Gasaustrittsseite 11 aufgebracht. Die edelmetallhaltige Schicht 5 weist als Edelmetall Platin mit einer Konzentration von 2 Gew.-% auf. Die Schicht 5 ist über eine definierte Länge L auf den Grundkörper 3 gasaustrittsseitig aufgebracht. Durch diese Gasaustrittsseitig angebrachte edelmetallhaltige Schicht 5 kann beim Einsatz des Katalysators 1 in einem SCR-Verfahren zur selektiven Entstickung des Abgases A einer Verbrennungsanlage, beispielsweise eines Dieselmotors, unter Zudosierung eines Reduktionsmittels ein Schlupf oder Durchbruch des Reduktionsmittels insbesondere gasaustrittsseitig sicher verhindert werden. Dies erfolgt durch Oxidation des Reduktionsmittels, beispielsweise Ammoniak, am Ende des Katalysators 1. Ein derartiger Katalysator 1 ist besonders für den Einsatz als SCR-Katalysator im transienten Betrieb, d.h. mit schnell wechselnden Betriebszuständen der Verbrennungsanlage, z.B. des Dieselmotors, und daraus resultierenden wechselnden Abgaszusammensetzungen geeignet. Dies ist vor allem im Nutzfahrzeugeinsatz der Fall. Ein auf diese Weise von Stickoxiden befreite gereinigte Abgas A' verlässt den Katalysator 1 gasaustrittsseitig.

In detaillierter Darstellung zeigt FIG 2 einen Ausschnitt des in FIG 1 gezeigten Katalysators 1 in vergrößerter Darstellung entlang der Schnittlinie II-II. Der Grundkörper 3 des Katalysators 1 ist als Vollextrudat hergestellt und bildet das katalytisch aktive Grundmaterial 29. Auf den Grundkörper 3 ist die Schicht 5 als ein Belag mit einer Schichtdicke d aufgebracht. Die Dicke d der Schicht 5 beträgt zwischen etwa 0,05 mm bis 1,0 mm und enthält als Edelmetallbestandteil 17 Platin in einer Konzentration von 2 Gew.-% bezogen auf das Gesamtgewicht der Schicht 5. Der Konzentrationsverlauf ist aufgrund des Herstellverfahrens für die katalytisch aktive Masse gemäß der Erfindung sehr gleichmäßig, d.h. homogen innerhalb der Schicht. Dies ist auf die Tatsache zurückzuführen, dass Kapillareffekte beim Aufbringen der edelmetallhaltigen Suspension auf den Formkörper weitgehend unterdrückt sind. Die edelmetallhaltige Schicht 5 ist daher durch den Herstellungsprozess geometrisch sehr gut definierbar und abgrenzbar gegenüber dem Grundkörper 3. Die edelmetallhaltige Schicht 5 kann durch Eintauchen des Formkörpers in die edelmetallhaltige Suspension oder durch Bespritzen oder Bestreichen des Formkörpers mit der edelmetallhaltigen Suspension aufgebracht werden. Als weiteren Bestandteil weist die Schicht 5 Titandioxid als Grundkomponente des keramischen Grundkörpers 3 des Katalysators 1 auf. Das Titandioxid weist hierbei eine BET von 30 bis 150 qm²/g auf. Die Schicht 5 überzieht den Grundkörper 3 sowohl im Bereich der Kanäle 13 als auch auf dessen äußerer Begrenzungsfläche 31.

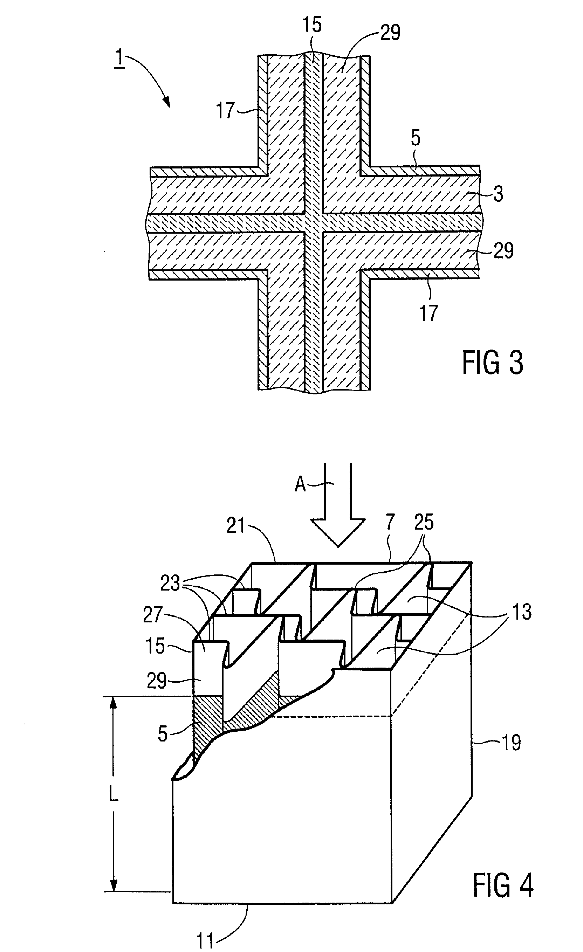

In FIG 3 ist in einer alternativen Ausführungsform ein Ausschnitt aus einem Querschnitt eines Katalysators 1 gezeigt, welcher einen Tragkörper 15 und eine auf den Tragkörper 15 aufgebrachte katalytisch aktive Masse aufweist. Der Tragkörper 15 ist ein Chrom-Aluminium-Stahl in Form eines plattenförmigen Gerüsts mit einer Dicke von 40 um. Die katalytisch aktive Masse umfasst den Grundkörper 3 mit katalytisch aktivem Grundmaterial 29 sowie die auf den Grundkörper 3 aufgebrachte edelmetallhaltige Schicht 5. Die katalytisch aktive Masse ist beidseitig durch Aufwalzen der Masse oder aber durch Eintauchen auf den Tragkörper 15 aufgetragen. Die Oberfläche des Tragkörpers 15 ist in FIG 3 nicht näher ausgestaltet, sie kann aber durch eine mechanische oder chemische Behandlung aufgeraut sein, um bessere Haftungseigenschaften des Grundkörpers 3 und der Schicht 5 zu erreichen. Die Schicht 5 weist Edelmetallkomponenten 17, beispielsweise Platin, Palladium, Ruthenium, Rhodium, Iridium und/oder Osmium in Form von in der Schicht 5 eingelagerten Mikrokristalliten vorgegebener Konzentration auf.

In FIG 4 ist in perspektivischer teilweise aufgebrochener Darstellung ein Plattenkatalysator 19 mit einer Gaseintrittsseite 7 und einer Gasaustrittsseite 11 für das katalytisch zu reinigende Abgas A dargestellt. Der Plattenkatalysator 19 besteht aus einem Elementkasten 21, in dem eine Anzahl von Katalysatorplatten 23 gestapelt sind. Die Katalysatorplatten 23 sind rechteckig ausgeführt und jeweils mit zumindest einer Sicke 25 versehen. Durch die Sicke 25 sind die Katalysatorplatten 23 voneinander beabstandet, so dass zwischen ihnen die von dem Abgas A durchströmbaren Kanäle 13 gebildet sind.

Die Katalysatorplatten 25 weisen jeweils einen Tragkörper 15 auf, der stromab der Gaseintrittsseite 7 mit einer katalytisch aktiven Schicht 29 beschichtet ist. Der Tragkörper 15 besteht aus einem Edelstahl und ist als sogenanntes, nicht näher dargestelltes Streckgitter ausgeführt. Die dem Abgas A zugängliche Oberfläche 27 jeder Katalysatorplatte 23 ist von der Gaseintrittsseite 7 bis zu der der Gaseintrittsseite gegenüberliegenden Gasaustrittsseite 11 mit dem katalytisch aktiven Grundmaterial 29 beschichtet. Stromab der Gaseintrittsseite 7 ist eine edelmetallhaltige Schicht 5 auf das Grundmaterial 29 aufgebracht. Die Schicht 5 erstreckt sich über eine definierte Länge L bis zur Gasaustrittsseite 11. Die katalytische Schicht 29 ist ein Metalloxid auf Basis von Titandioxid, Wolframtrioxid, Molybdäntrioxid und Vanadiumpentoxid und eignet sich zum Abbau von Stickoxiden sowie auch Dioxinen. Die das Grundmaterial bildende keramische Schicht 29 und der von der Schicht 5 gebildete Überzug der Schicht 29 bilden die katalytisch aktive Masse, aus der der Plattenkatalysator 19 gebildet ist.

Mit der Erfindung wird ein Verfahren zur Herstellung einer katalytisch aktiven Masse angegeben, wobei die formbare Masse zu einem Wabenkörper mit durchströmbaren Kanälen extrudiert, zu Peletts weiterverarbeitet oder als Beschichtung auf einen Tragkörper aufgebracht werden kann. Die Beschichtung des Tragkörpers geschieht dabei durch Aufwalzen der Masse oder aber durch Eintauchen. Die extrudierte weiterverarbeitete Masse wird anschließend getrocknet und der getrocknete Formkörper zur Ausbildung der katalytischen Aktivität kalziniert. Zur Herstellung einer edelmetallhaltigen Schicht auf den Formkörper, wird auf den Formkörper eine edelmetallhaltige Suspension aufgebracht und der Formkörper erneut getrocknet.

Aus der derart hergestellten katalytisch aktiven Masse bestehende Vollkörper oder aber mit dieser Masse beschichtete Tragkörper sind als Katalysatoren zum Abbau von Stickoxiden gemäß SCR-Verfahren oder auch zum Abbau von Dioxinen und/oder Furanen vielfach im Einsatz. Bei dem SCR-Verfahren, d.h. dem Verfahren der selektiven katalytischen Reduktion, werden Stickoxide in Gegenwart eines Reduktionsmittels an der katalytisch aktiven Masse zu ungefährlichem Stickstoff und Wasser umgesetzt. Dioxine und/oder Furane werden an der katalytisch aktiven Masse zu unschädlichen Verbindungen oxidiert. Mit der Erfindung kann eine katalytisch aktive Masse mit einer wohl definierten edelmetallhaltigen Schicht realisiert werden, die sich insbesondere zur Vermeidung eines Reduktionsmittel-Durchbruchs oder Reduktionsmittel-Schlupfes in einem SCR-Verfahren eignet.

## Patentansprüche

1. Verfahren zur Herstellung einer katalytisch aktiven Masse, wobei eine Grundkomponente zusammen mit einem Oxid oder einer gelösten Verbindung einer weiteren Komponente zu einer formbaren Masse verarbeitet, die formbare Masse zu einem Formkörper getrocknet und der Formkörper kalziniert wird,
**dadurch gekennzeichnet, dass** auf den Formkörper eine edelmetallhaltige Suspension aufgebracht und der Formkörper erneut getrocknet wird.

2. Verfahren nach Anspruch 1,
**dadurch gekennzeichnet, dass** die Suspension nach dem Kalzinieren aufgebracht wird.

3. Verfahren nach Anspruch 1 oder 2,
**dadurch gekennzeichnet, dass** die Suspension die Grundkomponente enthält.

4. Verfahren nach Anspruch 1, 2 oder 3,
**dadurch gekennzeichnet, dass** die Suspension die oder eine der weiteren Komponenten enthält.

5. Verfahren nach einem der vorhergehenden Ansprüche,
**dadurch gekennzeichnet, dass** Titandioxid als Grundkomponente mit einer BET von zwischen etwa 20-150 m²/g verarbeitet wird.

6. Verfahren nach einem der vorhergehenden Ansprüche,
**dadurch gekennzeichnet, dass** Wolfram und /oder Vanadium als weitere Komponente verarbeitet wird.

7. Verfahren nach einem der vorhergehenden Ansprüche,
**dadurch gekennzeichnet, dass** die Suspension mindestens ein Edelmetall aus der Gruppe umfassend Platin, Palladium, Ruthenium, Rhodium, Iridium und Osmium aufweist.

8. Verfahren nach einem der vorhergehenden Ansprüche,
**dadurch gekennzeichnet, dass** das Edelmetall in Form eines Precursors in der Suspension verarbeitet wird.

9. Verfahren nach einem der vorhergehenden Ansprüche,
**dadurch gekennzeichnet, dass** die Suspension in Form einer Schicht mit einer Schichtdicke d zwischen etwa 0,05 mm bis 1,0 mm aufgebracht wird.

10. Verfahren nach einem der vorhergehenden Ansprüche,
**dadurch gekennzeichnet, dass** als flüssige Komponente der Suspension Wasser verwendet wird.

11. Verfahren nach einem der vorhergehenden Ansprüche,
**dadurch gekennzeichnet, dass** die erneute Trocknung bei einer Temperatur zwischen etwa 20-200°C, insbesondere 20-100°C, erfolgt.

12. Verfahren nach einem der vorhergehenden Ansprüche,
**dadurch gekennzeichnet, dass** das Kalzinieren bei einer Temperatur zwischen etwa 200-800°C durchgeführt wird.

13. Katalysator(1) mit einer nach einem der Ansprüche 1 bis 10 hergestellten katalytisch aktiven Masse.

14. Katalysator (1) nach Anspruch 13 mit einem Grundkörper (3), auf den die edelmetallhaltige Schicht (5) aufgebracht ist.

15. Katalysator (1) nach Anspruch 14 mit einem Edelmetallgehalt in der Schicht (5) von 1- 5 Gew.-%.

16. Katalysator (1) nach Anspruch 14 oder 15 mit einem Platingehalt in der Schicht (5) von 1.5- 2.5 Gew.-%.

17. Katalysator (1) nach einem der Ansprüche 14 bis 16 mit einer Gaseintrittseite (7) und mit einer entlang einer Längsachse (9) der Gaseintrittsseite (7) gegenüberliegenden Gasaustrittsseite (11), bei dem die Schicht (5) auf den Grundkörper (3) entlang der Längsachse (9) zwischen der Gaseintrittsseite (7) und der Gasaustrittsseite (11) mit einer vorgegebenen Länge (L) aufgebracht ist.

18. Katalysator (1) nach einem der Ansprüche 13 bis 17 mit einem keramischen Grundkörper (3) umfassend TiO₂ mit einem Anteil von 70 bis 95 Gew.-% und WO₃ mit einem Anteil von 2 bis 10 Gew.-%.

19. Katalysator (1) nach Anspruch 18 mit mindestens einem weiteren Bestandteil aus der Gruppe umfassend 0-10 Gew.-% MoO₃, 0 bis 5 Gew.-% V₂O₅, 0.1 bis 6 Gew.-% Al₂O₃ sowie 0.1 bis 6 Gew.-% SiO₂

20. Verwendung des Katalysators (1) nach einem der Ansprüche 13 bis 19 zur katalytischen Abgasreinigung, insbesondere zum Abbau von Stickoxiden in Verbrennungsanlagen.
